(19) **Europäisches Patentamt European Patent Office Office européen des brevets**

(11) **EP 2 545 533 B1**

(12) **EUROPEAN PATENT SPECIFICATION**

(45) Date of publication and mention of the grant of the patent:
**16.08.2017 Bulletin 2017/33**

(51) Int Cl.:
*G07F 13/00* (2006.01)    *A47J 31/52* (2006.01)
*A47J 31/00* (2006.01)

(21) Application number: **11719623.8**

(22) Date of filing: **14.03.2011**

(86) International application number:
**PCT/IB2011/000536**

(87) International publication number:
**WO 2011/110944 (15.09.2011 Gazette 2011/37)**

(54) **BEVERAGE DISPENSING MACHINE AND METHOD FOR ITS ENERGY-SAVING OPERATION**

GETRÄNKEAUTOMAT UND VERFAHREN FÜR ENERGIESPARENDEN BETRIEB

MACHINE DE DISTRIBUTION DE BOISSONS ET PROCÉDÉ POUR SON FONCTIONNEMENT À FAIBLE CONSOMMATION D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2010 IT MI20100409**

(43) Date of publication of application:
**16.01.2013 Bulletin 2013/03**

(73) Proprietor: **Carimali S.P.A.**
**24040 Chignolo d'Isola (BG) (IT)**

(72) Inventor: **DOGLIONI MAJER, Andrea**
**I-24040 Chignolo d'Isola (BG) (IT)**

(74) Representative: **Gislon, Gabriele**
**Marietti, Gislon e Trupiano S.r.l.**
**Via Larga, 16**
**20122 Milano (IT)**

(56) References cited:
**EP-A2- 1 374 748**    **WO-A1-2005/091233**
**WO-A2-2009/016490**    **US-A- 4 437 499**

## Description

*Background of invention*

The present invention concerns a machine for dispensing beverages and similar foodstuffs and a method for its energy-saving operation.

More in particular, the invention concerns dispensing machines for hot foodstuffs, especially beverages such as coffee and the like and foods such as soups, with the ability to minimize energy consumption. An example of a field of application is machines for coffee and beverages in general, with accumulation boilers, or heat exchangers.

*State of the art*

Beverage and hot food dispensing machines have a water heating system, necessary for the preparation of the food or beverage, which consists of boilers, heat exchangers, or pre- or post-heating contact systems for water or for the ingredients. In the latest machines, the temperature of the heating system differs according to the mode of operation: operational delivery or in standby. The standby mode is normally activated after a set period of time has passed since the last delivery, generally 10-15 minutes; the passage from standby mode to operating mode is activated by an event such as inserting money or a card, or pressure on the delivery buttons. In other words, the system normally remains in delivery mode for a certain time after the end of delivery that had activated it, so that the next customer does not have to wait. If no more deliveries are performed, upon reaching the set time, the so-called timeout, the system enters the energy-saving mode and the temperature of the heating systems is lowered. When the next user arrives, the system remains in energy-saving mode until the user presses a button, making the machine return to delivery mode: this return step to the delivery condition lasts for an appreciable time during which the user is obliged to wait in front of the machine.

In general, this heating system is kept at a temperature above 90°C when the dispensing machine is in the operating mode, for example during delivery of a product, while the temperature in the standby step is generally adjusted to a level able to prevent possible bacterial growth in the water, for example around 70°C; the heating means, usually composed of resistances, are controlled to keep the temperature at the set level. Machines are also known of where the heating system is even switched off.

The procedure followed in the known art can be described, by way of example, as follows:

- the machine is in standby (preparation system in operating mode and lighting system on),
- after a set period of time, known as the timeout, the machine enters the energy-saving mode and:
- switches off the heating system or brings it to an economical holding temperature, optionally switching off the lighting system or turning it down to an economical lighting level,
- a user arrives in front of the machine and sees what products or services the machine can deliver, as well as any prices. If the lighting level of the lighting system is insufficient to obtain adequate information, the next step is performed,
- the user physically interacts with the machine to find out about the deliverable products or services, to indicate which product or service is desired and/or to pay for the product or service,
- the machine leaves the energy-saving mode and switches on the heating system or brings it to the operating or delivery temperature, and switches on the lighting system or brings it to the level of maximum functional effectiveness,
- the machine delivers the product or service, and
- return to first step.

Known machines and their methods of operation have the drawback of constituting a product preparation system in which the time for entering the operating mode, or rather the time necessary for reaching the delivery temperature, necessitates waiting an appreciable time from the user's point of view when the preparation system is not at its operating temperature. In fact, due to regulatory and practical restrictions that limit the maximum installable electrical power, the specifications of resistances that can be used in boilers for dispensing machines are such that the waiting time for reaching the temperature required for delivering the hot product is at least 40 seconds from the moment the resistance is switched on.

EP 1374748 A2 describes a beverage dispenser arranged to maintain stable temperatures for reliable delivery of dairy-based beverages.

WO 2009/016490 describes a vending machine equipped with a screen that shows the products on sale; a presence sensor is incorporated in the machine to switch the screen off when there are no users for the machine.

Presence sensors are also used in other fields, such as in US 2004/226993 for example, which concerns a car-park ticket machine that is equipped with a presence sensor to activate the machine when a user is present.

The object of the present invention is to resolve the above-mentioned problems and to provide a dispensing machine and a method of operation in which it is possible to simultaneously maximise the machine's energy saving, the level of service provided to the user and the machine's visibility.

This object is achieved by the present invention, which concerns a method of operation for a dispensing machine according to claim 1, a computer program for implementing the method of the invention, according to claim 10, and a beverage dispensing machine according to claim 14.

More in particular, the method of the invention concerns the operation of a foodstuffs dispensing machine, comprising a user interface, means of heating water, or rather one of the ingredients of the product to be delivered, a control unit connected to the heating means and a memory in which a plurality of machine operating parameters are stored. According to the invention, the heating means are set in an energy-saving mode for at least part of the time when the machine does not deliver a product, and in particular are set in one of at least two different energy-saving modes having different temperatures. The energy-saving level is selected on the basis of the machine operating parameters stored in said control unit.

The method of operation also comprises the step of generating at least one signal for the presence or absence of a user, sending said signal to said control unit and operating said heating means based on the generated signal. The user presence signal is preferably generated by at least one of either the sensor for the presence of a person, such as a proximity sensor, and a cup sensor, or rather a sensor that detects the presence or absence of a cup beneath the delivery nozzles. As better described further on, this sensor is able to detect the end of delivery due to removal of the cup from the delivery position.

According to a preferred embodiment of the invention, the machine is equipped with both of the above-mentioned sensors: a user presence sensor and a cup sensor.

Further preferred embodiment of the invention are described in the dependent claims.

The present invention has numerous advantages over the known art. In fact, the invention advances the moment when the machine leaves the energy-saving mode, i.e. it advances operation of the resistances to increase the temperature of the water the moment that a user approaches the machine. In addition, the machine is able to advance the moment when the machine enters the energy-saving state, by detecting removal of the cup from the delivery position and/or the user moving away from the machine.

This allows machines to be made that achieve high energy savings and at the same time reduce the time the user has to wait for the product preparation system to enter the operating mode.

In one embodiment, the machine is programmed to reduce the water temperature as soon as the presence sensor generates a user-absence signal or the cup sensor detects the cup's absence. In a preferred embodiment, the machine reduces the temperature as soon as delivery commences or immediately after the start of delivery. Energy saving is therefore greater in the case of a machine according to the invention with respect to the saving that can be achieved with traditional machines, as keeping the heating system fully on for the entire set time before going into standby, usually at least 10 minutes, is avoided.

A further advantage is given by the fact of having two energy-saving levels (preferably three) with decreasing temperature levels, the last of said levels corresponding to switching off the heating means.

Yet another advantage is given by the possibility of being able to deactivate the heating of the beverage or food preparation chamber; in fact, the reduction in response times that can be achieved with a user presence sensor allows the preparation chamber, for example a coffee-brewing chamber, to be left to cool, as this chamber can be quickly brought back to the desired temperature.

The invention is defined according to the method of claim 1, the computer program of claim 10 and the dispensing machine of claim 13. Embodiments are provided in the dependent claims.

These and other advantages shall be described in greater detail with reference to the enclosed drawings, provided by non-limitative way of example, where:

- Figure 1 is a block diagram of a machine according to the invention,
- Figure 2 is a diagram of another embodiment of a machine according to the invention,
- Figure 3 is a flowchart that shows the possible operating states of the machine,
- Figure 4 shows the time breakdown of a beverage delivery cycle,
- Figure 5 is a graph showing the modification of temperature in a boiler of a machine according to the invention, and
- Figure 6 is a graph that shows the energy saving that can be achieved with the method of the invention with respect to a traditional method.

In the following description, the temperatures of the delivery system are denoted using the following terms:

Tdlvry is the delivery temperature (the highest reached by the system and therefore the most costly in energy terms), Tidle is the first-level energy-saving temperature, which corresponds to the system's idle temperature, from which it is possible to reach Tdlvry in around 10 seconds. Already at this temperature, an energy saving of at least 10% is obtained with respect to Tdlvry,

Trest is the second-level energy-saving temperature, from which it is possible to reach Tdlvry in approximately 30 seconds, and

Tsleep is the third-level energy-saving temperature, from which it is possible to reach Tdlvry in one minute or more. This temperature generally coincides with that of the boiler switched off.

In addition, the term "set point" is used to define the reference temperature that the controller of the machine tries to maintain in the heating system at any given time.

The term "timeout" is intended as the time set for the passage from one temperature level to that of a lower temperature; the timeout is controlled by a timer.

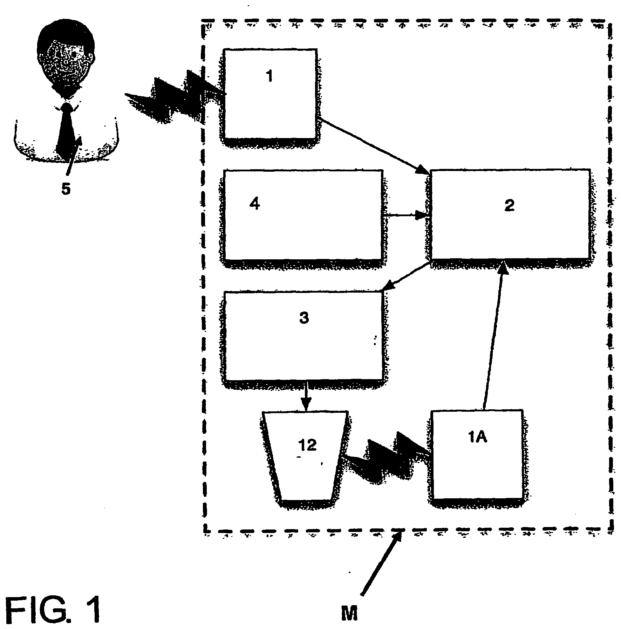

With initial reference to Figure 1, a dispensing machine M comprises a control unit 2 that manages the preparation of the product in a product preparation system 3 and that manages the product ordering operations through a user interface and lighting system 4. A sensor 1 that allows detecting the presence of a user 5 near to the machine M and a sensor 1A that allows detecting the presence of a cup 12 in the beverage delivery position, namely beneath the delivery nozzles, are connected to the control unit 2.

Suitable sensors for this purpose are, for example, proximity sensors, which are of known art and commercially available. Examples of such sensors are infrared and ultrasonic proximity sensors; the preferred ones are active infrared sensors.

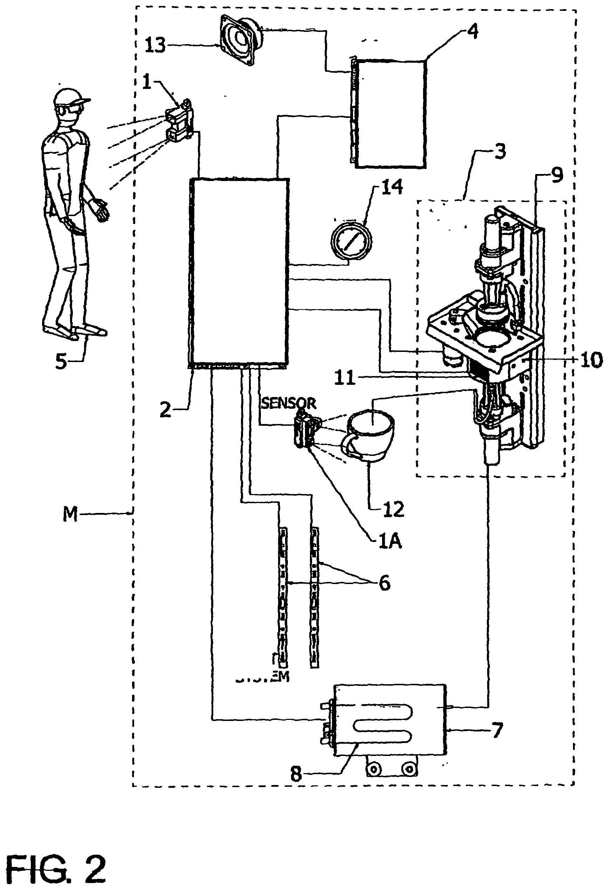

As visible in Figure 2, the machine M also comprises at least a timer 14, a lighting system 6 and a product preparation system equipped with heating means for at least one of the ingredients of the product to deliver. In the embodiment shown, these means comprise, in particular, an accumulation boiler 7 equipped with heating means 8, such as electrical resistances for example, to heat the water present in the boiler to the required temperature for preparing the product to be delivered.

Resistances of this type are known and used in the art and are able to maintain a temperature Tidle of approximately 80°C in the standby step (known as the Idle step, or the first energy-saving level), of approximately 70°C (Trest) in the second-level step (unless switched off, Tsleep) and can be controlled to bring the temperature to 90-95°C when the machine is in delivery mode (Tdlvry) and a hot product must be delivered.

The system 3 also comprises a delivery unit 9 provided in a known manner with a chamber 10 for the preparation of foodstuff prior to its delivery into the cup 12; in the embodiment shown, the unit 9 is a brewing unit for coffee and the preparation chamber 10 is equipped with heating means 11, of the type used in this field of the art to prevent the chamber cooling between one delivery and another and consequently cooling the beverage in preparation. The heating means can also be positioned and act on other parts of the preparation system in addition to, or as an alternative to, the preparation chamber, such as, for example, feed or delivery pipes for the beverage, water or other ingredients, or on the ingredient containers.

In turn, the user interface 4 can include a loudspeaker 13 for greater interactivity with the user.

The method of operation of the above-described machine is characterized in that it generates a signal of presence or absence of the user 5 with sensor 1 and/or 1A, sends said signal to the control unit 2 and operates the heating means, namely at least the resistances 8 of the boiler, based on the signal generated by the presence sensor 1 or 1A.

In other words, the heating means 8 are operated to increase the temperature of the water in the boiler 7 when sensor 1 or 1 A generates a presence signal for the user 5 and operated to decrease the temperature of the water in the boiler 7 when said sensor(s) generate a user-absence signal. As discussed in greater detail further on, one sensor or the other is used according to the required passage from one temperature to another.

In order to improve the efficiency of the system, the invention contemplates using the two sensors, one for the presence of a user and one for the presence of a cup.

In fact, by using just the user presence sensor, if people stop in front of the machine without using it, there would be energy consumption without any effective usage. In particular, at the end of selection, the cup sensor detects that the cup has been removed and this event triggers the early start of the timeout count. Thus, even if a user remains in front of the machine while drinking the beverage, the machine advances entry to the energy-saving mode to the moment a cup-absent signal is generated.

Furthermore, according to a preferred embodiment of the invention, Tidle is used as the normal set point, i.e. a temperature at which there is a large energy saving with respect to the known art. This means that the set point, the temperature used for the boiler, will be brought to Tdlvry only for the start of beverage delivery and will be immediately lowered again before the end. In consequence, the cycle changes as follows:

- the operating set point corresponds to Tidle and is set to Tdlvry if at least one of the following events occurs:
- the user approaches the machine and is detected by the person sensor,

- the user positions the cup or glass in the delivery compartment, activating the cup sensor in the delivery compartment.

At the start, during, or by the end of delivery at the latest, the set point is lowered again to Tidle. Obviously, the inertia of the boiler will not permit the water it contains to immediately reach the set-point temperature; nevertheless, the resultant energy saving is immediate. The choice of the time when to reset the set point to Tidle depends on the ratio between delivery volume and the volume of the boiler.

According to a preferred method of the present invention, at the end of delivery, the machine uses the cup sensor 1A and/or the person sensor 1 to determine whether to prepare again for a selection by raising the temperature to Tdlvry.

The steps of this procedure are the following:

- the cup sensor detects removal of the cup
- the set point remains at or is set to Tidle and the timer starts counting time necessary for reacting the first timeout
- the person sensor detects the user moving away
- no change, or
- the cup sensor detects the positioning of a new cup; in this case, the set point is set to Tdlvry to prepare the machine for the next beverage.

Preferably, the user interface 4 is also activated on the basis of the signal generated by the presence sensor 1. This activation comprises, for example, more lighting and/or switching on a screen, preferably of the touch control type, on which the commands or some of the commands appear for ordering the desired beverage or product.

In this regard, it should be noted that the presence of an interface of the above-described type, where the control software contemplates the selection of successive commands to arrive at the desired order, is preferable in certain cases to an interface where direct controls are present (via pushbuttons for example); in fact, the time required for the cascaded selection (with successive choices) of the final order allows part of the waiting time for preparation of the beverage to be used for ordering the beverage. In the meantime, the machine has already received the command to enter the "operating" mode; in other words, heating of the boiler (or equivalent means), or of other functions such as the brewing chamber, are being carried out as specified in the following.

As mentioned above, according to the present invention, sensor 1, through the control unit 2, also controls the lighting means 6, which are therefore operated on the basis of the signal generated by the proximity sensor 1. Preferably, the heating means of the beverage preparation chamber are also operated on the basis of the signal generated by the presence sensor 1 or 1 A.

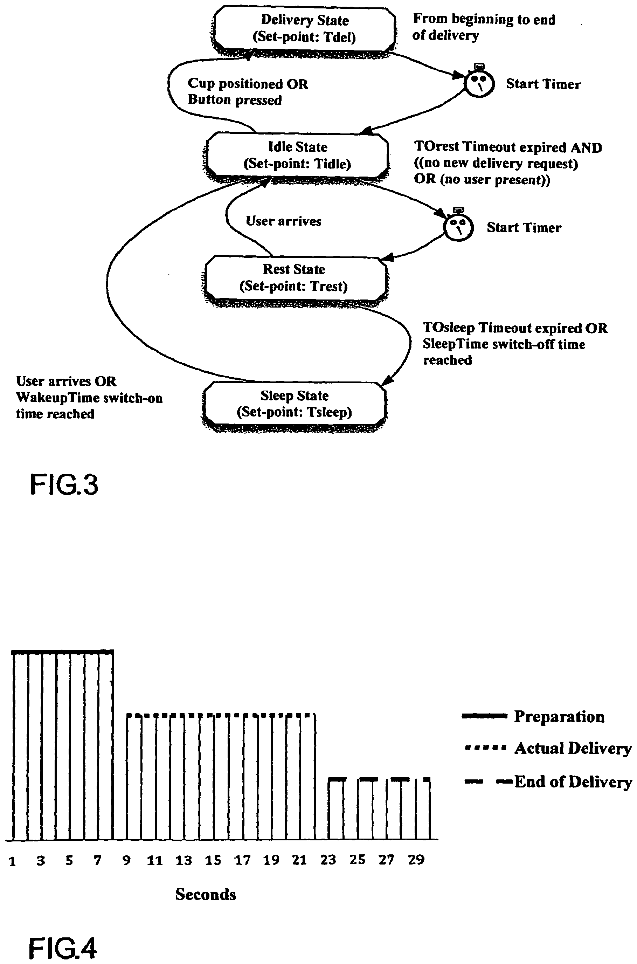

The operation of the machine according to the present invention shall now be described in greater detail, with reference to the flowchart in Figure 3.

The machine is normally waiting to deliver a beverage, but keeps the water in the boiler, or heating means, at a temperature (Tidle) lower than that necessary for delivery in order to save energy. This state corresponds to a first energy-saving level and is known as Idle. In the preferred embodiment, the machine will only pass to the Delivery state (to which temperature Tdlvry corresponds) if a cup is positioned in the delivery compartment or, in a machine with automatic cup release, if a selection button is pressed. This transition will last approximately 5-10 seconds, depending on the amount of time the machine needs to prepare itself for delivery, during which a series of activities (grinding the coffee, moving the coffee unit, moving any cup-release systems, etc.) is carried out, resulting in delay before the liquid effectively starts to come out: this time is exploited to bring the boilers to the correct temperature Tdlvry.

The three typical steps of a delivery cycle are shown in the graph in Figure 4: Delivery Setup (preparation), Actual Delivery (effective delivery) and Delivery Cleanup (end of delivery), during which the various actuators, such as the coffee unit for example, are returned to their starting positions.

In the example in Figure 4, the delivery setup step lasts roughly 8 seconds. By varying the set point at the beginning of this step, this "dead" time is used for raising the temperature of the boilers from Tidle to Tdlvry.

The applicable formula for having a waiting time not more than that of preparation (Delivery Setup) is as follows:

$$\text{Tidle} = \text{Tdlvry} - (\text{Rate} \cdot \text{Delivery Setup Time})$$

where:

Tidle and Tdlvry are the two set-point temperatures [°C]
Rate is the rate of temperature increase inside the boiler with the resistances switched on [°C / sec]
DeliverySetupTime is the duration of the delivery setup [sec]

*Example 1*

*Assuming for the machine with the characteristics shown in Figure 4, a boiler where the rate of temperature increase with the resistances switched on is approximately 1°C/sec and with Tdlvry = 90° C (temperature needed for delivering good* coffee), *Tidle for this system will be 8°C lower than Tdlvry, i.e. 82° C.*

*With the above settings, energy savings will stabilize at around 10% with respect to machines without energy control and 5% with respect to machines with known energy control.*

According to the present invention, the machine's normal state of operation is that of Idle and therefore after delivery starts, the machine must return to the Tidle condition as soon as possible in order to achieve maximum energy savings.

The preferred solution is that of passing to this condition immediately after having initiated delivery of the beverage; however, this solution depends on the type and the volume of the boiler, or water heating means, present in the machine. A preferred boiler configuration for coffee machines is the one where a volume of incoming water corresponds to a volume of outgoing water and where it must follow a fixed route to prevent incoming water being sucked directly towards the outlet, thereby lowering the drawing temperature too much.

In addition, to make a good coffee, it is necessary to keep the temperature during brewing as constant as possible; in other words, the water leaving the boiler must not be affected by the cold water entering. On the other hand, the latter contributes to lowering the boiler's temperature and therefore to reach a lower set-point temperature (Tidle).

By using a boiler of the type discussed above, if the ratio between the volume of the delivered beverage and the volume of the boiler is less than 10%, it is possible to set the set point to Tidle immediately after the start of delivery (time 9 in Figure 4), as the delivered volume ensures that all the water delivered for the beverage is at the necessary Tdlvry temperature for obtaining a good brew. Instead, if the ratio is between 10% and 20%, setting of the set point is delayed until roughly halfway through delivery, i.e. the timer 14 will start the Idle step halfway through delivery, approximately at time 15 in Figure 4. Lastly, if the ratio is greater than 20%, it will not be possible to advance the setting of the set point and it will be necessary to wait for delivery of the beverage to finish, time 22 in Figure 4, before entering the end of delivery step.

For example, assuming a boiler volume of approximately 1 litre, for beverages with a volume exceeding 200 cc, the passage from Delivery to Idle takes place at the actual end of delivery, while most of coffee delivered, of the espresso type, has a volume decidedly under 100 ml and therefore allows the Tidle set point to be set at the actual start of delivery.

When this transition occurs, the timer is set to zero.

The Rest state, which corresponds to the second energy-saving level is a state where significant energy saving is achieved, even if maintaining the boilers at a temperature such that not too much time is needed to return to the Idle state. The Trest set point is preferably calculated according to the formula:

$$Trest = Tidle - (Rate \cdot MaxUserWait)$$

where:

Trest and Tidle are the two set-point temperatures [°C]
Rate is the rate of temperature increase inside the boiler with the resistance switched on [°C / sec]
MaxUserWait is the desired maximum waiting time for a user [sec]

*Example 2*

*Continuing with the data previously specified in Example 1, in a machine that has Tidle = 82 °C, MaxUserWait = 20 sec and Rate = 1 °C / sec, Trest = 62 °C is obtained. In other words, by setting the maximum wait operating parameter to 20 sec and given the heating rate parameter of 1°C/sec (characteristic of the machine's boiler), the temperature is chosen as 62°C.*

*With the above settings, energy savings will at around 30% with respect to machines without energy control and 25% with respect to machines with first-generation energy control.*

The machine passes from Idle (first energy-saving level) to Rest (second energy-saving level) if, at the moment that the timer reaches the timeout indicated by TOrest, no cup has been positioned in the delivery zone or there is no user near the machine; this is detected by means of sensors 1 and 1A.

The timer is set to zero when this transition occurs.

An appropriate calculation of the TOrest timeout permits maximum energy savings to be achieved, together with maximum system availability: in fact, if the timeout is too short, the system offers poor service, while if it is too long, the energy savings obtained will be suboptimal.

To this end, the value for TOrest is calculated as a function of past usage of the machine and therefore varies with time, or rather throughout the day. For example, the timeout will be greater in the period(s) of the day when deliveries are more frequent.

The transition from Rest to Idle preferably takes place using a signal generated by the user presence sensor. If the user presence sensor detects the arrival of a user, the system returns to the Idle state, changing the set point from Trest to Tidle. With respect to using just the cup sensor, this permits earlier heating and shortening the waiting times for the user.

According to a preferred embodiment of the invention, a third energy-saving level, known as the Sleep state, is provided.

In the Sleep state, the boilers and lighting systems are completely switched off, thereby maximizing energy savings. There will still be minimal current absorption due to the electronic board that continues to be powered.

The energy savings in this state can arrive to 95%.

The transition from Rest to Sleep takes place when the TOsleep timeout expires or when the automatic switch-off time SleepTime is reached; at this point, the system passes to the Sleep state by setting the set point to Tsleep.

As in the case of TOrest the values for TOsleep and SleepTime are also calculated according to the machine's past operation, i.e. based on stored machine usage data that is used to determine how much time to wait after a delivery before passing first to Rest and then to Sleep or to switch the machine off (Sleep Time).

If the person sensor 1 detects the arrival of a client, the system passes directly from the Sleep state to the Idle state. It is also preferable that the method of operation provides for a switch-on time (WakeupTime), i.e. the time when the machine directly enters the Idle state from the Sleep state. This time is set on the basis of the recorded machine usage data (so-called log).

Various methods of the known art can be used to detect operation and record the necessary information for setting the machine operating parameters, such as TOrest, TOsleep, SleepTime and WakeupTime. For example, it is possible to use information regarding the hourly frequency of delivery, the average time customers are absent according to the time of day, the average waiting time for the passage from an energy-saving mode to an operating mode and the number of times the machine has passed from Trest (second energy-saving level) to Tidle (first energy-saving level) to generate operating parameters that take this information into account for optimizing operation of the machine and reducing the waiting times.

These parameters can be factory set on the basis of known data and according to the use for which the machine is destined; for example, a machine destined for office use will be used at different times with respect to those of a machine used in a hospital and therefore the values for TOrest and TOsleep during the course of the day will be different for the two machines.

In an alternative embodiment, the machine is equipped with hardware and software with processing capabilities similar to that of a PC, which allows the operating parameters to be detected and set in an autonomous manner. Thus, having access to a significant amount of memory and processing power, the system records operating data and events happening on the machine in order to perform statistical calculations to maximize the effectiveness of the timeout triggers and the times of operation.

The collected data is filed and processed in a known manner, for example, in a SQLite database. This database engine has the characteristic of being self-contained and embeddable, making it an excellent candidate for the application according to the present invention, where speed and a low memory footprint are important fundamental characteristics. Data processing typically takes place through simple SQL queries run on the database engine.

In both cases, the machine will have a stored computer program that can be read by the control unit 2 to execute the program's code and perform the above-discussed steps of the method according to the present invention. The program will therefore contain executable computer code for time-dependent switching on and switching off, an executable computer code for regulating the temperature of the water in said at least two energy-saving levels (Idle, Rest and Sleep), and executable computer code for regulating the time(s) for timeouts TOrest and TOsleep.

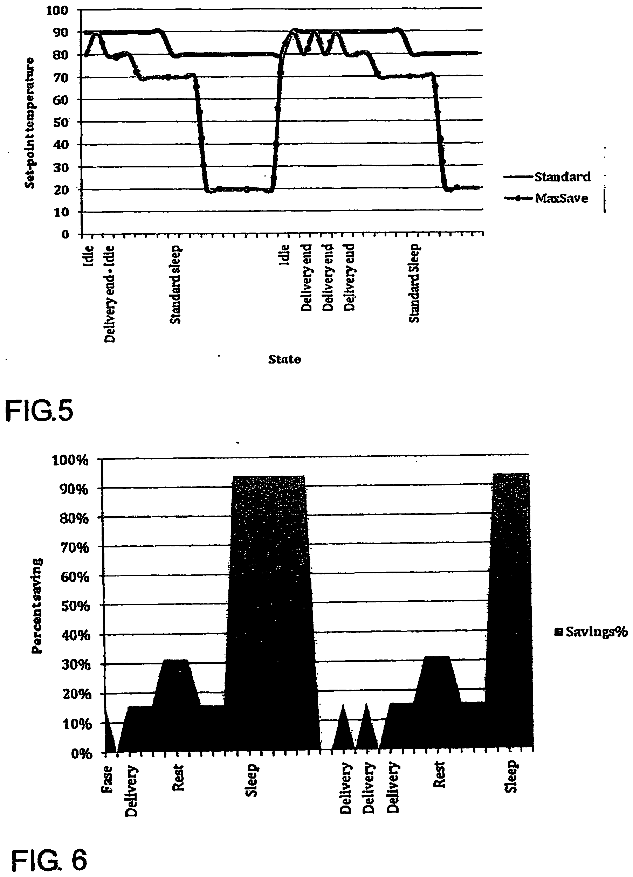

Figures 5 and 6 emphasize the energy savings that can be achieved with the method according to the invention when applied to the machine's boilers.

Figure 5 shows the state of the machine on the abscissa and the set-point temperature of the boiler on the ordinate, with a solid line showing the temperature course in a machine with the traditional method of operation (Standard) and with a dotted line showing the course in the same machine when the method of the present invention is implemented. The Idle temperature in the method of the invention corresponds to the standby temperature in the traditional method and is approximately 80°C; unlike the standard method, that of the invention has a second and a third energy-saving level at temperatures of approximately 70 and 20 °C.

Figure 6 visually shows the energy-saving percentage that can be achieved with the method of the invention in the case shown in Figure 5, for the same operation profile. As can be appreciated from the graph, except for the times in both profiles when the machine passes from 80°C to 90°C or when it is in the delivery step, in which consumption is identical in the two cases, there is always energy saving.

**Claims**

1. A method of operation of a dispensing machine (M) for beverages and similar foodstuffs, comprising a user interface (4), heating means (7 and 8) for heating water, and a control unit (2) connected to said heating means (7 and 8), wherein a plurality of machine operating parameters are stored in a memory of said control unit (2) and wherein said heating means are put in an energy-saving mode for at least part of the time when said machine does not deliver a product, the dispensing machine (M) **characterized in that** it comprises a delivery mode having a delivery temperature (Tdlvry) and at least two different energy saving levels having different temperatures (Tidle and Trest) for said energy-saving mode, wherein a first energy saving level has a first temperature (Tidle) and a second energy saving level has a second temperature (Trest) different from said first temperature (Tidle), and in selecting one of said energy-saving levels based on said machine operating parameters stored in said control unit, and **in that** said method comprises the steps of: generating a signal of user presence or absence, sending said signal to said control unit (2) and operating said heating means (7 and 8) on the basis of the generated signal to increase or decrease the temperature of said water between said first temperature (Tidle) of said first energy saving level, said second temperature (Trest) of said second energy saving level and said delivery temperature (Tdlvry) of said delivery mode.

2. The method of operation according to claim 1, wherein said signal is generated by at least one of either the sensor (1) for detecting the presence of a user (5) near to said machine or a sensor (1A) for detecting the presence of a cup (12) in the delivery position, or a button of said machine.

3. The method according to claim 2, wherein three energy-saving levels are provided, with three temperatures for the heating means (Tidle, Trest and Tsleep) and respective water holding temperatures of 80°C, 70°C and 40°C, or less.

4. The method according to claim 2 or 3, wherein said machine is normally maintained at said first energy-saving level (Tidle) and said control unit operates the heating means to reach said delivery temperature (Tdlvry) only for carrying out said step of beverage delivery.

5. The method according to claim 4, wherein said passage from a Tdlvry set point to a Tidle set point takes place, at the latest, by the end of the effective beverage delivery step.

6. The method according to one of the preceding claims, wherein a third energy-saving level (Tsleep) corresponding to the switching off of the heating means is provided.

7. The method according to one of the preceding claims, wherein said machine operating parameters include at least one of the following parameters: switch-on and switch-off times, temperature of said energy-saving mode and timeout time(s) for passing from one energy-saving level to another.

8. The method according to claim 7, wherein said parameters are calculated on the basis of at least one of the following information: hourly frequency of delivery, average length of time in which customers are absent according to the time of day, average waiting time for the passage from an energy-saving temperature (Tidle, Trest and Tsleep) to another or to a delivery temperature (Tdlvry).

9. The method according to any of claims 1 to 7, wherein said machine comprises lighting means (6), a beverage preparation chamber (10) and heating means (11) for the latter and/or for the feed or delivery pipes of ingredients or of the product and wherein said lighting means and said heating means of said chamber are operated on the basis of the signal generated by said at least one sensor (1 or 1A).

10. A computer program comprising an executable computer code for controlling the operation of a dispensing machine (M) for beverages and similar foodstuffs comprising a user interface, heating means for heating water, and a control unit connected to said heating means, said program being stored on a computer-readable media or on a readable memory and **characterized in that** it comprises: an executable computer code for reading a plurality of machine operating parameters stored in a memory of said control unit, an executable computer code for generating a signal of user presence or absence, an executable computer code for sending said signal to said control unit and an executable computer code for operating said heating means on the basis of the generated signal, an executable computer code for placing said heating means in an energy-saving mode for at least part of the time when said machine does not deliver a product and an executable computer code for selecting one of at least two different energy-saving levels having different temperatures based on said machine operating parameters stored in said control unit, to operate said heating means on the basis of the generated signal to increase or decrease the temperature of said water between: a first temperature (Tidle) of a first energy saving level; a second temperature (Trest) of a second energy saving level; a delivery temperature (Tdlvry).

11. The computer program according to claim 10, comprising an executable computer code for time-dependent switching on and switching off, an executable computer code for regulating the temperature of the water in said at least two energy-saving modes and an executable computer code for regulating the timeout time(s).

12. The computer program according to claim 10 or 11, comprising an executable computer code for detecting at least one of the following information: hourly frequency of delivery, average length of time in which customers are absent according to the time of day, average waiting time for the passage from an energy-saving mode to an operating mode, the number of times that the machine has passed from the energy-saving mode with a lower temperature to the delivery mode; as well as an executable computer code for obtaining the parameters referred to in claim 11 from said information.

13. A dispensing machine of beverages and similar foodstuffs (M), comprising a user interface (4), water heating means (7 and 8), a control unit (2) and a memory for storing a computer program, **characterized in that** said water heating means (7, 8) are arranged to provide a beverage delivery temperature (Tdlvry) and at least two different energy saving levels having different temperatures (Tidle, Trest), and is further **characterized in that** it also comprises at least one sensor (1 or 1A) for detecting the presence of a user (5), said detection sensor being connected to said control unit to operate with the latter said heating means, the dispensing machine arranged to operate according to the method of claim 1.

14. The machine according to claim 13, wherein said at least one sensor is chosen from a sensor (1) for detecting the presence of a user (5) near to said machine and a sensor (1A) for detecting the presence of a cup (12) in delivery position.

15. The machine according to claim 14, also comprising a computer program according to any of claims 10 to 13, said program comprising executable computer codes for putting said heating means in at least one of two or more energy-saving levels (Tidle, Trest, and Tsleep) and in which said control unit is able to read and execute said executable computer codes of said computer program.

16. The machine according to claim 14 or 15, wherein said at least one sensor (1 or 1A) is an active infrared sensor.

17. The machine according to any of claims 13 to 16, also comprising means of lighting the machine, wherein said control unit (2) is set to operate the lighting means (6) and/or said user interface (4) on the basis of signals received from said at least one sensor (1 or 1A).

18. The machine according to any of claims 13 to 17, also comprising a beverage preparation chamber (10) and heating means (11) for the latter and/or for the feed or delivery pipes of ingredients or of the product, wherein said control unit is set to operate said heating means of the brewing chamber and/or of the feed or delivery pipes, on the basis of the signals received from said at least one sensor.

**Patentansprüche**

1. Ein Verfahren zum Betreiben einer Abgabevorrichtung (M) für Getränke und ähnliche Lebensmittel umfassend eine Benutzerschnittstelle (4), Heizmittel (7 und 8) zum Erhitzen von Wasser und eine mit den Heizmitteln (7 und 8) verbundene Steuereinheit (2), wobei eine Vielzahl von Maschinenbetriebsparametern in einem Speicher der Steuereinheit (2) gespeichert sind und wobei die Heizmittel für mindestens einen Teil der Zeit, während der die Vorrichtung kein Produkt abgibt, in einen Energiesparmodus versetzt werden, wobei die Abgabevorrichtung (M) **dadurch gekennzeichnet ist, dass** sie einen Abgabemodus umfasst mit einer Abgabetemperatur (Tdlvry) und mindestens zwei verschiedene Energiesparniveaus mit unterschiedlichen Temperaturen (Tidle und Trest) für den Energiesparmodus, wobei ein erstes Energiesparniveau eine erste Temperatur (Tidle) und ein zweites Energiesparniveau eine zweite Temperatur (Trest) verschieden von der ersten Temperatur (Tidle) aufweist, und durch das Auswählen eines der Energiesparniveaus auf der Grundlage der Maschinenbetriebsparameter, die in der Steuereinheit gespeichert sind, und, dass das Verfahren die Schritte umfasst: Erzeugen eines Signals der Benutzeranwesenheit oder -abwesenheit, Senden des Signals an die Steuereinheit (2) und Betreiben der Heizmittel (7 und 8) auf der Basis des erzeugten Signals, um die Temperatur des Wassers zwischen der ersten Temperatur (Tidle) des ersten Energiesparniveaus, der zweiten Temperatur (Trest) des zweiten Energiesparniveaus und der Abgabetemperatur (Tdlvry) des Abgabemodus zu erhöhen oder zu verringern.

2. Das Verfahren zum Betreiben gemäß Anspruch 1, wobei das Signal von mindestens einem der folgenden Bauteile erzeugt wird, entweder von dem Sensor (1) zum Erfassen der Anwesenheit eines Benutzers (5) nahe der Vorrichtung oder von einem Sensor (1A) zum Erfassen des Vorhandenseins eines Bechers (12) in der Abgabeposition, oder von einem Knopf der Maschine.

3. Das Verfahren gemäß Anspruch 2, wobei drei Energiesparniveaus mit drei Temperaturen für die Heizmittel (Tidle, Trest und Tsleep) und entsprechende Wasserhaltetemperaturen von 80°C, 70°C und 40°C oder weniger vorgesehen sind.

4. Das Verfahren gemäß Anspruch 2 oder 3, bei dem die Vorrichtung normalerweise auf dem ersten Energiesparniveau (Tidle) gehalten wird und die Steuereinheit die Heizmittel betreibt, um die Abgabetemperatur (Tdlvry) nur zur Durchführung des Schrittes der Getränkeabgabe zu erreichen.

5. Das Verfahren gemäß Anspruch 4, wobei der Übergang von einem Tdlvry-Sollwert zu einem Tidle-Sollwert spätestens am Ende des effektiven Getränkeabgabeschrittes erfolgt.

6. Das Verfahren gemäß einem der vorhergehenden Ansprüche, wobei ein dritter Energiesparmodus (Tsleep) entsprechend der Abschaltung der Heizmittel vorgesehen ist.

7. Das Verfahren gemäß einem der vorhergehenden Ansprüche, wobei die Maschinenbetriebsparameter mindestens einen der folgenden Parameter umfassen: Einschalt- und Ausschaltzeiten, Temperatur des Energiesparmodus und Zeitüberschreitungszeit(en) für den Übergang von einem Energiesparniveau zum anderen.

8. Das Verfahren gemäß Anspruch 7, wobei die Parameter auf der Basis von mindestens einer der folgenden Informationen berechnet werden: stündliche Häufigkeit der Abgabe, durchschnittliche Zeitdauer, in der die Kunden entsprechend der Tageszeit abwesend sind, durchschnittliche Wartezeit für den Übergang von einer energiesparenden Temperatur (Tidle, Trest und Tsleep) zu einer anderen oder zu einer Abgabetemperatur (Tdlvry).

9. Das Verfahren gemäß irgendeinem der Ansprüche 1 bis 7, wobei die Vorrichtung eine Beleuchtungseinrichtung (6), eine Getränkevorbereitungskammer (10) und Heizmittel (11) für diese und/oder für die Zufuhr- oder Abgabeleitungen für Zutaten oder für das Produkt umfasst, und wobei die Beleuchtungseinrichtung und die Heizmittel der Kammer auf der Grundlage des Signals betrieben werden, das von dem mindestens einen Sensor (1 oder 1A) erzeugt wird.

10. Ein Computerprogramm umfassend einen ausführbaren Computercode zur Steuerung des Betriebs einer Abgabevorrichtung (M) für Getränke und ähnliche Lebensmittel, umfassend eine Benutzerschnittstelle, Heizmittel zum Erhitzen von Wasser, und eine mit den Heizmitteln verbundene Steuereinheit, wobei das Programm auf einem computerlesbaren Medium oder in einem auslesbaren Speicher gespeichert ist und **dadurch gekennzeichnet ist, dass** es umfasst: einen ausführbaren Computercode zum Lesen einer Vielzahl von Maschinenbetriebsparametern, die in einem Speicher der Steuereinheit gespeichert sind, einen ausführbaren Computercode zum Erzeugen eines Signals der Anwesenheit oder Abwesenheit eines Benutzers, einen ausführbaren Computercode zum Senden des Signals an die Steuereinheit und einen ausführbaren Computercode zum Betreiben der Heizmittel auf der Basis des erzeugten Signals, einen ausführbaren Computercode zum Versetzen der Heizmittel in einen Energiesparmodus für mindestens einen Teil der Zeit, während der die Vorrichtung kein Produkt abgibt, und einen ausführbaren Computercode zum Auswählen eines von mindestens zwei verschiedenen Energiesparniveaus mit unterschiedlichen Temperaturen auf der Grundlage der in der Steuereinheit gespeicherten Maschinenbetriebsparameter, um die Heizmittel auf der Basis des erzeugten Signals zu betreiben, um die Temperatur des Wassers innerhalb der folgenden Temperaturen zu erhöhen oder zu verringern: einer ersten Temperatur (Tidle) eines ersten Energiesparniveaus; einer zweiten Temperatur (Trest) eines zweiten Energiesparniveaus; einer Abgabetemperatur (Tdlvry) des Abgabemodus.

11. Das Computerprogramm gemäß Anspruch 10, umfassend einen ausführbaren Computercode zum zeitabhängigen Ein- und Ausschalten, einen ausführbaren Computercode zur Steuerung der Temperatur des Wassers in den mindestens zwei Energiesparmodi und einen ausführbaren Computercode zum Steuern der Zeitüberschreitung(en).

12. Das Computerprogramm gemäß Anspruch 10 oder 11, umfassend einen ausführbaren Computercode zum Erfassen mindestens einer der folgenden Informationen: stündliche Häufigkeit der Abgabe, durchschnittliche Zeitdauer, in der die Kunden entsprechend der Tageszeit abwesend sind, durchschnittliche Wartezeit für den Übergang von einem Energiesparmodus in einen Betriebsmodus, die Anzahl von Zeitpunkten, bei denen die Vorrichtung aus dem Energiesparmodus mit einer niedrigeren Temperatur in den Abgabemodus gegangen ist; sowie einen ausführbaren Computercode zum Erhalten der in Anspruch 11 genannten Parameter aus den Informationen.

13. Eine Abgabevorrichtung für Getränke und ähnliche Lebensmittel (M) umfassend eine Benutzerschnittstelle (4), Heizmittel (7 und 8) zum Erhitzen von Wasser, eine Steuereinheit (2) und einen Speicher zum Speichern eines Computerprogramms, **dadurch gekennzeichnet, dass** die Heizmittel (7, 8) zum Erhitzen von Wasser angeordnet sind, um eine Getränkeabgabetemperatur (Tdlvry) und mindestens zwei verschiedene Energiesparniveaus mit unterschiedlichen Temperaturen (Tidle, Trest) bereitzustellen, und weiterhin gekennzeichnet ist, dass sie auch mindestens einen Sensor (1 oder 1A) zum Erfassen der Anwesenheit eines Benutzers (5) umfasst, wobei der Erfassungssensor mit der Steuereinheit verbunden ist, um mit der letzteren die Heizmittel zu betreiben, wobei die Abgabevorrichtung eingerichtet ist, nach dem Verfahren gemäß Anspruch 1 betrieben zu werden.

14. Die Vorrichtung gemäß Anspruch 13, wobei der mindestens eine Sensor ausgewählt ist aus einem Sensor (1) zum Erfassen der Anwesenheit eines Benutzers (5) in der Nähe der Vorrichtung und einem Sensor (1A) zum Erfassen des Vorhandenseins eines Bechers (12) in der Abgabeposition.

15. Die Vorrichtung gemäß Anspruch 14, die ebenfalls ein Computerprogramm gemäß irgendeinem der Ansprüche 10 bis 13 umfasst, wobei das Programm ausführbare Computercodes umfasst, um die Heizmittel in mindestens eines von zwei oder mehr Energiesparniveaus (Tidle, Trest und Tsleep) zu versetzen und in der die Steuereinheit in der Lage ist, die ausführbaren Computercodes des Computerprogramms zu lesen und auszuführen.

16. Die Vorrichtung gemäß Anspruch 14 oder 15, wobei der mindestens eine Sensor (1 oder 1A) ein aktiver Infrarotsensor ist.

17. Die Vorrichtung gemäß irgendeinem der Ansprüche 13 bis 16, die weiterhin eine Einrichtung zum Beleuchten der Vorrichtung aufweist, wobei die Steuereinheit (2) so eingestellt ist, dass sie die Beleuchtungseinrichtung (6) und/oder die Benutzerschnittstelle (4) auf der Grundlage von Signalen betreibt, die von dem mindestens einen Sensor (1 oder 1A) empfangen werden.

18. Die Vorrichtung gemäß irgendeinem der Ansprüche 13 bis 17, die außerdem eine Getränkezubereitungskammer (10) und Heizmittel (11) für diese und/oder für die Zufuhr- oder Abgabeleitungen für Zutaten oder für das Produkt enthält, wobei die Steuereinheit eingestellt ist, um die Heizmittel der Brühkammer und/oder der Zufuhr- oder Abgabeleitungen auf der Basis der von dem mindestens einen Sensor empfangenen Signale zu betreiben.

**Revendications**

1. Procédé de fonctionnement d'une machine de distribution (M) pour boissons et denrées alimentaires similaires, comprenant une interface utilisateur (4), des moyens de chauffage (7 et 8) pour chauffer de l'eau, et une unité de commande (2) connectée auxdits moyens de chauffage (7 et 8), dans lequel une pluralité de paramètres de fonctionnement de machine sont stockés dans une mémoire de ladite unité de commande (2) et dans lequel lesdits moyens de chauffage sont mis dans un mode économie d'énergie pendant au moins une partie du temps pendant laquelle ladite machine ne distribue pas de produit, la machine de distribution (M) étant **caractérisée en ce qu'**elle comprend un mode distribution ayant une température de distribution (Tdlvry) et au moins deux niveaux d'économie d'énergie différents ayant des températures différentes (Tidle et Trest) pour ledit mode économie d'énergie, dans laquelle un premier niveau d'économie d'énergie a une première température (Tidle) et un second niveau d'économie d'énergie a une deuxième température (Trest) différente de ladite première température (Tidle), et **en ce que** la sélection de l'un desdits niveaux d'économie d'énergie est basée sur lesdits paramètres de fonctionnement de machine stockés dans ladite unité de commande, et **en ce que** ledit procédé comprend les étapes : de génération d'un signal de présence ou d'absence d'utilisateur, d'envoi dudit signal à ladite unité de commande (2) et de fonctionnement desdits moyens de chauffage (7 et 8) sur la base du signal généré afin d'augmenter ou de diminuer la température de ladite eau entre ladite première température (Tidle) dudit premier niveau d'économie d'énergie, ladite deuxième température (Trest) dudit second niveau d'économie d'énergie et ladite température de distribution (Tdlvry) dudit mode distribution.

2. Procédé de fonctionnement selon la revendication 1, dans lequel ledit signal est généré par au moins un capteur parmi le capteur (1) destiné à détecter la présence d'un utilisateur (5) près de ladite machine ou un capteur (1A) destiné à détecter la présence d'une tasse (12) dans la position de distribution, ou un bouton de ladite machine.

3. Procédé selon la revendication 2, dans lequel trois niveaux d'économie d'énergie sont fournis, avec trois températures pour les moyens de chauffage (Tidle, Trest et Tsleep) et des températures de maintien de l'eau respectives de 80 °C, 70 °C et 40 °C, ou moins.

4. Procédé selon la revendication 2 ou 3, dans lequel ladite machine est normalement maintenue audit premier niveau d'économie d'énergie (Tidle) et ladite unité de commande fait fonctionner les moyens de chauffage pour atteindre ladite température de distribution (Tdlvry) uniquement pour réaliser ladite étape de distribution de boisson.

5. Procédé selon la revendication 4, dans lequel ledit passage d'un point de consigne Tdlvry à un point de consigne Tidle a lieu, au plus tard, avant la fin de l'étape de distribution de boisson effective.

6. Procédé selon l'une des revendications précédentes, dans lequel un troisième niveau d'économie d'énergie (Tsleep) correspondant à l'extinction des moyens de chauffage est fourni.

7. Procédé selon l'une des revendications précédentes, dans lequel lesdits paramètres de fonctionnement de machine incluent au moins l'un des paramètres suivants : temps d'allumage et d'extinction, température dudit mode économie d'énergie et temps d'arrêt pour passer d'un niveau d'économie d'énergie à un autre.

8. Procédé selon la revendication 7, dans lequel lesdits paramètres sont calculés sur la base d'au moins une des informations suivantes : fréquence horaire de distribution, durée moyenne pendant laquelle des acheteurs sont absents selon l'heure de la journée, temps d'attente moyen pour le passage d'une température d'économie d'énergie (Tidle, Trest et Tsleep) à une autre ou à une température de distribution (Tdlvry).

9. Procédé selon l'une quelconque des revendications 1 à 7, dans lequel ladite machine comprend un moyen d'éclairage (6), une chambre de préparation de boisson (10) et un moyen de chauffage (11) pour cette dernière et/ou pour les tuyaux d'acheminement ou de distribution d'ingrédients ou du produit et dans lequel ledit moyen d'éclairage et ledit moyen de chauffage de ladite chambre fonctionnent sur la base du signal généré par ledit au moins un capteur (1 ou 1A).

10. Programme informatique comprenant un code informatique exécutable pour commander le fonctionnement d'une machine de distribution (M) pour boissons et denrées alimentaires similaires, comprenant une interface utilisateur, des moyens de chauffage pour chauffer de l'eau, et une unité de commande connectée auxdits moyens de chauffage, ledit programme étant stocké sur un support lisible par ordinateur ou sur une mémoire lisible, et **caractérisé en ce qu'**il comprend : un code informatique exécutable pour lire une pluralité de paramètres de fonctionnement de machine stockés dans une mémoire de ladite unité de commande, un code informatique exécutable pour générer un signal de présence ou d'absence d'utilisateur, un code informatique exécutable pour envoyer ledit signal à ladite unité de commande et un code informatique exécutable pour faire fonctionner lesdits moyens de chauffage sur la base du signal généré, un code informatique exécutable pour placer lesdits moyens de chauffage dans un mode économie d'énergie pendant au moins une partie du temps pendant laquelle ladite machine ne distribue pas de produit et un code informatique exécutable pour sélectionner l'un parmi au moins deux niveaux d'économie d'énergie différents ayant des températures différentes sur la base desdits paramètres de fonctionnement de machine stockés dans ladite unité de commande, pour faire fonctionner ledit moyen de chauffage sur la base du signal généré afin d'augmenter ou de diminuer la température de ladite eau entre : une première température (Tidle) d'un premier niveau d'économie d'énergie ; une deuxième température (Trest) d'un deuxième niveau d'économie d'énergie ; une température de distribution (Tdlvry).

11. Programme informatique selon la revendication 10, comprenant un code informatique exécutable pour l'allumage et l'extinction en fonction du temps, un code informatique exécutable pour réguler la température de l'eau dans lesdits au moins deux modes d'économie d'énergie et un code informatique exécutable pour réguler le(s) temps d'arrêt.

**12.** Programme informatique selon la revendication 10 ou 11, comprenant un code informatique exécutable pour détecter au moins l'une des informations suivantes : fréquence horaire de distribution, durée moyenne pendant laquelle des acheteurs sont absents selon l'heure de la journée, temps d'attente moyen pour le passage d'un mode économie d'énergie à un mode fonctionnement, le nombre de fois où la machine est passée du mode économie d'énergie avec une température plus basse au mode distribution ; ainsi qu'un code informatique exécutable pour obtenir les paramètres auxquels fait référence la revendication 11 à partir desdites informations.

**13.** Machine de distribution de boissons et denrées alimentaires similaires (M), comprenant une interface utilisateur (4), des moyens de chauffage (7 et 8), une unité de commande (2) et une mémoire pour stocker un programme informatique, **caractérisée en ce que** lesdits moyens de chauffage d'eau (7, 8) sont agencés pour fournir une température de distribution de boisson (Tdlvry) et au moins deux niveaux d'économie d'énergie différents ayant des températures différentes (Tidle, Trest), et sont en outre **caractérisés en ce qu'**ils comprennent également au moins un capteur (1 ou 1A) pour détecter la présence d'un utilisateur (5), ledit capteur de détection étant connecté à ladite unité de commande pour faire fonctionner avec cette dernière lesdits moyens de chauffage, la machine de distribution étant agencée pour fonctionner selon le procédé de la revendication 1.

**14.** Machine selon la revendication 13, dans laquelle ledit au moins un capteur est choisi parmi un capteur (1) destiné à détecter la présence d'un utilisateur (5) près de ladite machine et un capteur (1a) pour détecter la présence d'une tasse (12) en position de distribution.

**15.** Machine selon la revendication 14, comprenant également un programme informatique selon l'une quelconque des revendications 10 à 13, ledit programme comprenant des codes informatiques exécutables pour mettre lesdits moyens de chauffage dans au moins l'un de deux, ou plus, niveaux d'économie d'énergie (Tidle, Trest, et Tsleep) et dans laquelle ladite unité de commande est capable de lire et d'exécuter lesdits codes informatiques exécutables dudit programme informatique.

**16.** Machine selon la revendication 14 ou 15, dans laquelle ledit au moins un capteur (1 ou 1A) est un capteur infrarouge actif.

**17.** Machine selon l'une quelconque des revendications 13 à 16, comprenant également un moyen d'éclairage de la machine, dans laquelle ladite unité de commande (2) est réglée pour faire fonctionner le moyen d'éclairage (6) et/ou ladite interface utilisateur (4) sur la base de signaux reçus en provenance dudit au moins un capteur (1 ou 1A).

**18.** Machine selon l'une quelconque des revendications 13 à 17, comprenant également une chambre de préparation de boisson (10) et un moyen de chauffage (11) pour cette dernière et/ou pour les tuyaux d'acheminement ou de distribution d'ingrédients ou du produit, dans laquelle ladite unité de commande est réglée pour faire fonctionner ledit moyen de chauffage de la chambre de brassage et/ou des tuyaux d'acheminement ou de distribution, sur la base des signaux reçus en provenance dudit au moins un capteur.

FIG. 1

FIG. 2

**Delivery State**
**(Set-point: Tdel)**

From beginning to end
of delivery

Cup positioned OR
Button pressed

Start Timer

**Idle State**
**(Set-point: Tidle)**

TOrest Timeout expired AND
((no new delivery request)
OR (no user present))

User arrives

Start Timer

**Rest State**
**(Set-point: Trest)**

TOsleep Timeout expired OR
SleepTime switch-off time
reached

User arrives OR
WakeupTime switch-on
time reached

**Sleep State**
**(Set-point: Tsleep)**

## FIG.3

Preparation

Actual Delivery

End of Delivery

1  3  5  7  9  11  13  15  17  19  21  23  25  27  29

**Seconds**

## FIG.4

FIG.5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1374748 A2
- WO 2009016490 A
- US 2004226993 A